# EUROPÄISCHE PATENTSCHRIFT

(11) **EP 2 665 941 B1**
(45) Veröffentlichungstag und Bekanntmachung des Hinweises auf die Patenterteilung: **27.04.2016**
(21) Anmeldenummer: 12700679.9
(22) Anmeldetag: 18.01.2012
(51) Int. Cl.: F16B 25/00

(54) **SPANPLATTENSCHRAUBE**
PARTICLEBOARD SCREW
VIS POUR PANNEAUX DE PARTICULES

(30) Priorität: 21.01.2011 DE 102011002962
(43) Veröffentlichungstag der Anmeldung: 27.11.2013
(73) Patentinhaber: SWG Schraubenwerk Gaisbach GmbH, 74638 Waldenburg (DE)
(72) Erfinder: STIEBITZ, Günter, 74638 Waldenburg (DE); ROLL, Patrick, 74523 Schwäbisch Hall (DE)
(74) Vertreter: Patentanwälte Ruff, Wilhelm, Beier, Dauster & Partner mbB
(86) Internationale Anmeldenummer: PCT/EP2012/050679
(87) Internationale Veröffentlichungsnummer: WO 2012/098139

(56) Entgegenhaltungen:
- EP-A1- 0 705 987
- EP-A2- 1 411 252
- US-A1- 2003 231 940

## Beschreibung

Die Erfindung betrifft eine Spanplattenschraube. Solche Spanplattenschrauben haben ein Gewinde, das an die Verwendung dieser Art von Schrauben zum Einschrauben in Spanplatten angepasst ist. Sie können natürlich auch zur Befestigung in Holz verwendet werden.

Es ist bereits eine Schraube dieser Art bekannt, die an dem Schaft zwischen den Gewindegängen in Längsrichtung der Schraube verlaufende vorspringende Rippen aufweist. Diese Rippen sollen eine Sicherung gegen Lockern der Schraube darstellen. Sie verlaufen über die gesamte Länge des Gewindes. Ihr Querschnitt ist rechteckig (EP 705987 A1).

Weiterhin bekannt ist eine Schraube zur Verwendung bei aus Holz hergestellten Bauteilen (EP 1411252 A2). Diese Schraube weist in einem sich über drei Gewindegänge erstreckenden vorderen Bereich eine Vielzahl von durch Nuten getrennten Vorsprüngen auf, die einen dreieckigen unsymmetrischen Querschnitt enthalten. **Die Vorsprünge schließen unmittelbar aneinander an.** Der Zweck dieser Rippen besteht darin, beim Einschrauben das Bohrloch durch Verdrängen des Materials aufzuweiten, ohne die Auszugsfestigkeit der Schraube herabzusetzen.

**Weiterhin ist eine Holzschraube bekannt, die zwischen zwei benachbarten Windungen zwei radiale Vorsprünge aufweist. Die Vorsprünge bilden entweder Kanten oder sind abgerundet (**US 2003/0231940 A1**).**

Der Erfindung liegt die Aufgabe zu Grunde, eine Spanplattenschraube zu schaffen, die bei der Verwendung mit Holz oder holzähnlichem Material ein verbessertes Einschrauben und eine geringere Spaltwirkung erreicht, die aber auch noch für Dübelverschraubungen geeignet ist.

Zur Lösung dieser Aufgabe schlägt die Erfindung eine Spanplattenschraube mit den im Anspruch 1 genannten Merkmalen vor. Weiterbildungen der Erfindung sind Gegenstand von Unteransprüchen.

Es hat sich überraschenderweise herausgestellt, dass die dreieckige Querschnittsform mit der nicht abgerundeten, sondern abgeflachten Spitze diese Möglichkeiten bietet.

In Weiterbildung der Erfindung kann vorgesehen sein, dass der Beginn der Schaberippen an der Stelle angeordnet ist, wo die konische Spitze der Schraube in den zylindrischen Schraubenschaft übergeht. Die Schaberippen selbst sind dann nur an dem zylindrischen Schraubenschaft ausgebildet.

In nochmaliger Weiterbildung der Erfindung **ist** vorgesehen, dass die Schaberippen sich in Längsrichtung der Schraube über etwa eine bis zwei, maximal drei Windungen des Gewindes erstrecken. Eine längere Ausbildung der Schaberippen ist nicht erforderlich.

Erfindungsgemäß kann in Weiterbildung vorgesehen sein, dass die radiale Erstreckung der Schaberippen, also ihr Überstand gegenüber der Oberfläche des Schafts, zwischen etwa 10% und 20% des Schaftdurchmessers liegt.

Es hat sich als besonders sinnvoll herausgestellt, dass der Winkel zwischen den beiden Begrenzungsflanken jeder Schaberippe etwa 90° beträgt.

Erfindungsgemäß kann vorgesehen sein, dass die Schaberippen gleichmäßig über den Umfang der Schraube verteilt angeordnet sind.

Insbesondere **ist** vorgesehen, dass alle Schaberippen die gleiche Länge und die gleiche Anordnung und Ausbildung aufweisen. Es kann ebenfalls vorgesehen sein, dass alle Schaberippen die gleiche Querschnittsgröße und den gleichen Querschnitt aufweisen.

Es hat sich als sinnvoll herausgestellt, je nach Größe der Schraube beispielsweise sieben oder neun Schaberippen vorzusehen. Auch jede andere Zahl von Rippen ist möglich.

Sinnvollerweise können die Schaberippen einen symmetrischen Querschnitt aufweisen.

Aufgrund der Größe und der Zahl der Schaberippen ergibt sich, dass zwischen den Schaberippen ein Abstand in Umfangsrichtung vorhanden ist, in dem die glatte Schaftoberfläche zugänglich ist.

Dieser Abstand zwischen den Schaberippen kann beispielsweise zwischen 0,1 und 0,3 mm liegen, bei Schrauben der Nenngröße 3,5 bzw. 4,5 mm.

Die Umfangserstreckung der flachen Außenseite der Schaberippen, also die abgeflachten Spitze, liegt beispielsweise in einem Bereich von 0,01 bis 0,03 mm.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer von der Erfindung vorgeschlagenen Spanplattenschraube;
- Figur 2: in vergrößertem Maßstab einen Querschnitt durch die Schraube mit eingezeichnetem Gewindespitzendurchmesser;
- Figur 3: in nochmals vergrößertem Maßstab die Form und Anordnung der Schaberippen;
- Figur 4: eine perspektivische Ansicht des vorderen die Schaberippen aufweisenden Schraubenendes.

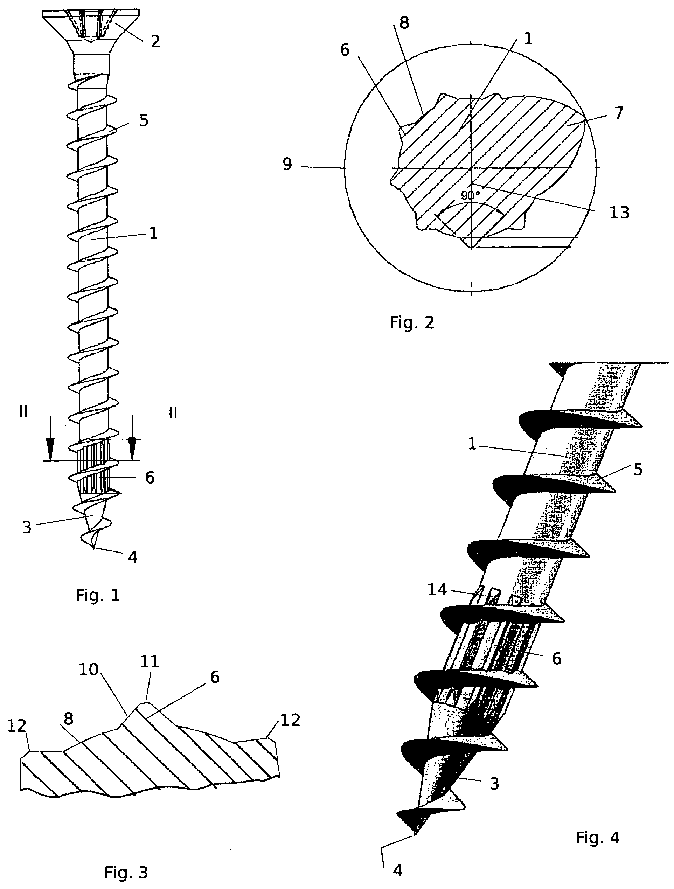

Die Figur 1 zeigt die Seitenansicht einer Schraube nach der Erfindung. Die Schraube hat einen zylindrischen Schraubenschaft 1, an dessen einem in Figur 1 oberen Ende ein Schraubenkopf 2 ausgebildet ist. Es handelt sich im vorliegenden Fall um einen Senkkopf. An dem dem Senkkopf 2 der Schraube gegenüberliegenden Ende des Schafts 1 ist die Schraubenspitze 3 ausgebildet. Die Schraubenspitze 3 weist die Form eines spitzen Kegels auf. Sie endet in einer punktförmigen Spitze 4.

Über die gesamte Länge des Schraubenschafts 1 erstreckt sich ein Gewinde 5. Dieses Gewinde 5 führt auch über die Schraubenspitze 3 bis zu der punktförmigen Spitze 4.

In dem an die Schraubenspitze 3 angrenzenden Bereich des Schraubenschafts 1 sind mehrere Schaberippen 6 ausgebildet, die in Längsrichtung der Schraube verlaufen und sich im dargestellten Ausführungsbeispiel über zwei Windungen des Gewindes 5 erstrecken. Alle Schaberippen 6 beginnen an der gleichen Stelle und haben die gleiche Länge. Man kann schon der Figur 1 entnehmen, dass die radiale Erstreckung der Schaberippen 6 deutlich kleiner ist als der Außendurchmesser des Gewindes 5.

Die Figur 2, auf die jetzt Bezug genommen wird, zeigt in vergrößertem Maßstab einen Querschnitt durch den Schaft der Schraube längs Linie II-III in Figur 1. Der Schnitt geht also auch durch eine Windung 7 des Gewindes 5. Man kann der Figur 2 entnehmen, dass die Schaberippen im Querschnitt angenähert dreieckig sind, und dass ihre von dem Schaft 1 abgewandte größte radiale Erstreckung abgeflacht ist. Zwischen den einzelnen Schaberippen 6 ist die Oberfläche 8 des Schafts 1 sichtbar. Die Schaberippen 6 weisen also in Umfangsrichtung einen Abstand auf, der im dargestellten Ausführungsbeispiel etwa so groß ist wie die Erstreckung der Schaberippe 6 in Umfangsrichtung selbst.

Man kann ebenfalls sehen, dass die radiale Erstreckung der Schaberippen 6 gegenüber dem Abstand zwischen der Oberfläche 8 des Schraubenschafts 1 und dem Umfang 9 des Gewindes 5 klein ist.

Die genaue Form der Schaberippen in ihrem Querschnitt geht aus Figur 3 hervor. Figur 3 zeigt in vergrößertem Maßstab einen Ausschnitt aus dem Querschnitt der Figur 2. Jeder Schaberippe 6 weist einen Querschnitt in Form eines abgeflachten Dreiecks auf. Die beiden Begrenzungsflanken 10 der Schaberippe 6 schließen miteinander einen Winkel von 90° ein, der in Figur 2 auch eingezeichnet ist. An ihrer gedachten Spitze ist eine Abflachung 11 vorhanden, so dass dort zwei Kanten 12 gebildet sind, die aber einen stumpfen Winkel haben. Zwischen jeweils zwei Schaberippen 6 ist, wie bereits erwähnt, die Oberfläche 8 des Schraubenschafts 1 frei.

Zeichnet man durch die Mitte der Abflachung 11 eine durch die Längsachse der Schraube gehende Linie ein, siehe die Linie 13 in Figur 2, so ist die Schaberippe 6 symmetrisch zu dieser Mittellinie.

Die vergrößerte perspektivische Ansicht der Figur 4 zeigt nochmals, dass die Schaberippen 6 an der Stelle beginnen, wo die Schraubenspitze 3 in den Schaft 1 übergeht. Die Schaberippen 6 sind an ihrem Anfang und an ihrem Ende durch eine Schrägfläche 14 abgeschrägt, bilden also dort keine scharfe Spitze.

## Patentansprüche

1. Spanplattenschraube, mit
1.1 einem Schraubenkopf (2),
1.2 einem Schraubenschaft (1),
1.3 einer Schraubenspitze (3),
1.4 einem sich über mindestens einen Teil des Schraubenschafts (1) und/oder die Schraubenspitze (3) erstreckenden Gewinde (5) sowie mit
1.5 mehreren in Längsrichtung der Schraube verlaufenden Schaberippen (6), die
1.6 einen dreieckigen Querschnitt mit einer abgeflachten Spitze aufweisen,
**dadurch gekennzeichnet, dass**
1.7 die Schaberippen (6) sich in Längsrichtung über etwa ein bis zwei Windungen des Gewindes (5) erstrecken,
1.8 alle Schaberippen (6) die gleiche Länge und die gleiche Anordnung aufweisen und
1.9 zwischen den Schaberippen die Schaftoberfläche zugänglich ist.

2. Spanplattenschraube nach Anspruch 1, bei der die Schaberippen (6) im Bereich des Übergangs zwischen dem zylindrischen Schraubenschaft (1) und der konischen Schraubenspitze (3) beginnen und am Schraubenschaft (1) angeordnet sind.

3. Spanplattenschraube nach Anspruch 1 oder 2, bei der die radiale Erstreckung der Schaberippen (6) zwischen etwa 10% und etwa 20% des Schaftdurchmessers liegt.

4. Spanplattenschraube nach einem der vorhergehenden Ansprüche, bei der der Winkel zwischen den beiden Begrenzungsflanken (10) jeder Schaberippe (6) etwa 90° beträgt.

5. Spanplattenschraube nach einem der vorhergehenden Ansprüche, bei der die Schaberippen (6) gleichmäßig über den Umfang der Schraube verteilt sind.

6. Spanplattenschraube nach einem der vorhergehenden Ansprüche, bei der alle Schaberippen (6) die gleiche Querschnittsgröße aufweisen.

7. Spanplattenschraube nach einem der vorhergehenden Ansprüche, mit zwischen sieben und zehn, vorzugsweise neun, Schaberippen (6).

8. Spanplattenschraube nach einem der vorhergehenden Ansprüche, bei der der Querschnitt der Schaberippen (6) symmetrisch ausgebildet ist.

9. Spanplattenschraube nach einem der vorhergehenden Ansprüche, bei der die Schaberippen (6) in Umfangsrichtung einen Abstand voneinander aufweisen.

## Claims

1. Particle board or chipboard screw, having
1.1 a screw head (2),
1.2 a screw shank (1),
1.3 a screw tip (3),
1.4 a thread (5) extending at least over part of the screw shank (1) and/or the screw tip (3), and having
1.5 a plurality of scraper ribs (6) running in the longitudinal direction of the screw, which
1.6 have a triangular cross section with a flattened tip,
**characterized in that**
1.7 the scraper ribs (6) extend in the longitudinal direction over approximately one to two turns of the thread (5),
1.8 all of the scraper ribs (6) have the same length and the same arrangement, and
1.9 between the scraper ribs the surface of the shank is exposed.

2. Particle board screw according to claim 1, wherein the scraper ribs (6) start in the vicinity of the transition between the cylindrical screw shank (1) and the conical screw tip (3) and are disposed on the screw shank (1).

3. Particle board screw according to claim 1 or 2, wherein the radial extent of the scraper ribs (6) is between about 10 % and about 20 % of the shank diameter.

4. Particle board screw according to any of the preceding claims, wherein the angle between the two boundary edges (10) of each scraper rib (6) is about 90 °.

5. Particle board screw according to any of the preceding claims, wherein the scraper ribs (6) are distributed uniformly over the circumference of the screw.

6. Particle board screw according to any of the preceding claims, wherein all of the scraper ribs (6) have the same cross-sectional size.

7. Particle board screw according to any of the preceding claims, comprising between seven and ten, preferably nine, scraper ribs (6).

8. Particle board screw according to any of the preceding claims, wherein the cross section of the scraper ribs (6) has a symmetrical design.

9. Particle board screw according to any of the preceding claims, wherein the scraper ribs (6) are at a distance from one another in the circumferential direction.

## Revendications

1. Vis pour panneaux de particules, comprenant
1.1 une tête de vis (2),
1.2 une tige de vis (1),
1.3 une pointe de vis (3),
1.4 un filetage (5) s'étendant sur au moins une partie de la tige de vis (1) et/ou la pointe de vis (3), et comprenant
1.5 plusieurs nervures de raclage (6) s'étendant dans la direction longitudinale de la vis, qui
1.6 présentent une section transversale triangulaire avec une pointe aplatie,
**caractérisée en ce que**
1.7 les nervures de raclage (6) s'étendent dans la direction longitudinale sur approximativement un à deux enroulements du filetage (5),
1.8 toutes les nervures de raclage (6) présentent la même longueur et le même agencement et
1.9 la surface de la tige est accessible entre les nervures de raclage.

2. Vis pour panneaux de particules selon la revendication 1, dans laquelle les nervures de raclage (6) commencent dans la région de la transition entre la tige de vis cylindrique (1) et la pointe de vis conique (3) et sont disposées sur la tige de vis (1).

3. Vis pour panneaux de particules selon la revendication 1 ou 2, dans laquelle l'étendue radiale des nervures de raclage (6) est comprise entre environ 10 % et environ 20 % du diamètre de la tige.

4. Vis pour panneaux de particules selon l'une quelconque des revendications précédentes, dans laquelle l'angle entre les deux flancs de limitation (10) de chaque nervure de raclage (6) vaut approximativement 90°.

5. Vis pour panneaux de particules selon l'une quelconque des revendications précédentes, dans laquelle les nervures de raclage (6) sont réparties uniformément sur la périphérie de la vis.

6. Vis pour panneaux de particules selon l'une quelconque des revendications précédentes, dans laquelle toutes les nervures de raclage (6) présentent la même taille en section transversale.

7. Vis pour panneaux de particules selon l'une quelconque des revendications précédentes, comprenant entre sept et dix, de préférence neuf, nervures de raclage (6).

8. Vis pour panneaux de particules selon l'une quelconque des revendications précédentes, dans laquelle la section transversale des nervures de raclage (6) est réalisée de manière symétrique.

9. Vis pour panneaux de particules selon l'une quelconque des revendications précédentes, dans laquelle les nervures de raclage (6) sont espacées les unes des autres dans la direction périphérique.
